# EUROPEAN PATENT APPLICATION

(11) **EP 3 560 669 A1**
(43) Date of publication of application: **30.10.2019**
(21) Application number: 17884709.1
(22) Date of filing: 15.12.2017
(51) Int. Cl.: B29B 15/08, B32B 5/10, B32B 5/28, B29K 101/10

(54) **FIBER-REINFORCED RESIN MATERIAL AND LAMINATE**

(30) Priority: 20.12.2016 JP 2016246258
(71) Applicant: Spiber Inc., Yamagata 997-0052 (JP); Kojima Industries Corporation, Toyota-shi, Aichi 471-8588 (JP)
(72) Inventor: ONO, Tatsuo, Aichi 471-8588 (JP); IMAMURA, Ken, Aichi 471-8588 (JP); UEDA, Shinya, Aichi 471-8588 (JP)
(74) Representative: Wunderlich & Heim Patentanwälte Partnerschaftsgesellschaft mbB
(86) International application number: PCT/JP2017/045100
(87) International publication number: WO 2018/116979

(57) **Abstract**

The present invention improves the toughness of a laminate. A fiber-reinforced resin material according to the present invention contains a fiber material in a resin; and the fiber material contains high-rigidity fibers (14) and fibroin fibers (24). According to the present invention, a laminate (30) is formed by laminating and bonding a plurality of fiber-reinforced resin layers (32). A fiber-reinforced resin layer (32-1) contains the high-rigidity fibers (14) in a resin (12). A fiber-reinforced resin layer (32-2) contains the fibroin fibers (24) in a resin (22).

## Description

### TECHNICAL FIELD

The present invention relates to a fiber-reinforced resin material containing high-rigidity fibers and fibroin fibers, to a laminate, and to a fiber-reinforced resin coated body.

### BACKGROUND

Conventionally, fiber-reinforced plastic (FRP) in which glass fibers and the like are mixed in a plastic material to improve strength is widely used, and carbon fiber-reinforced plastic (CFRP) using carbon fibers as fiber is also known.

When a plate material of carbon fiber-reinforced plastic is formed, for example, a predetermined number of sheet-like intermediate products called prepregs obtained by impregnating carbon fibers with a resin in solution and semi-drying them are laminated, and then heated and the like to cure and mold the resin. As a result, laminates of various shapes made of carbon fiber-reinforced plastic are prepared. Such laminates are used in various fields such as aircraft, vehicles, building materials, and sporting goods because they are lightweight and strong. Patent Document 4 shows a golf shaft constituted by a laminate in which carbon fiber prepregs are laminated.

Patent Documents 1 to 3 describe fibroin fibers.

### CITATION LIST

### PATENT LITERATURE

[Patent Document 1] JP 5427322 B
[Patent Document 2] JP 5540154 B
[Patent Document 3] JP 5584932 B
[Patent Document 4] JP 2013-116208 A

### SUMMARY

### TECHNICAL PROBLEM

Here, a laminate has various applications, and demands for strength, deformation amount, and the like are different. Generally, it is desired to have high strength, a large deformation amount, and a high energy absorption capacity. In addition, since carbon fiber-reinforced plastic has high strength, delamination is likely to occur in a laminate when deformation amount is large.

### SOLUTIONS TO PROBLEM

The present invention provides a fiber-reinforced resin material containing a fiber material in a resin, and the fiber material contains high-rigidity fibers and fibroin fibers.

Also, the high-rigidity fiber is preferably a fiber with an initial elastic modulus of 30 GPa or more.

In addition, the present invention provides a laminate in which fiber-reinforced resin layers containing a fiber material in a resin is laminated and bonded, and the fiber material includes high-rigidity fibers and fibroin fibers.

Moreover, the high-rigidity fiber preferably contain at least one of an aramid fiber, a PBO fiber, a glass fiber, and a carbon fiber.

Further, the high-rigidity fiber is preferably a carbon fiber.

Furthermore, the fiber-reinforced resin layers preferably contain a carbon fiber-reinforced resin layer containing carbon fibers in a resin, and a fibroin fiber-reinforced resin layer containing fibroin fibers in a resin.

Also, the fiber-reinforced resin layers preferably contain a fiber-reinforced resin layer in which carbon fibers and fibroin fibers are mixed in a resin.

In addition, the present invention provides a fiber-reinforced resin coated body containing a substrate that deforms by input of load and a laminate according to any one of the above, and a fibroin fiber-reinforced resin layer mainly made of fibroin fibers is laminated adjacent to the substrate.

Moreover, the ratio of the fibroin fiber-reinforced resin preferably decreases with increasing distance from the substrate side.

Further, the fibroin fiber is preferably a fiber composed of a protein derived from or similar to a natural spider silk protein.

Furthermore, the fibroin fiber is preferably silk.

### ADVANTAGEOUS EFFECTS OF INVENTION

According to the present invention, impact energy absorption capacity of a laminate can be improved. It is possible to suppress occurrence of delamination.

### BRIEF DESCRIPTION OF DRAWINGS

FIG. 1 shows diagrams of configurations of fiber-reinforced resin prepregs and a laminate.
FIG. 2 shows schematic diagrams of configurations of samples.
FIG. 3 shows diagrams of outlines of an interlaminar shear test and a three-point bending test.
FIG. 4 shows a diagram of relationships between displacement and load in interlaminar shear tests.
FIG. 5 shows photographs of cross sections in the interlaminar shear tests.
FIG. 6 shows a diagram of relationships between displacement and load in three-point bending tests.
FIG. 7 shows a diagram of maximum loads in the three-point bending tests.
FIG. 8 shows a diagram of displacement in the three-point bending tests.
FIG. 9 shows a diagram of fracture energy (absorbed energy) in a three-point bending test of one sample.
FIG. 10 shows a diagram of fracture energy in the three-point bending tests.
FIG. 11 shows a diagram of a configuration of a fiber-reinforced resin coated body.
FIG. 12 shows photographs of cross sections of Sample 1.
FIG. 13 shows photographs of cross sections of Sample 2.
FIG. 14 shows photographs of cross sections of Sample 3.
FIG. 15 shows photographs of cross sections of Sample 4.
FIG. 16 shows photographs of cross sections of Sample 5.
FIG. 17 shows photographs of cross sections of Sample 6.
FIG. 18 shows photographs of cross sections of Sample 7.
FIG. 19 shows photographs of cross sections of Sample 8.
FIG. 20 shows photographs of cross sections of Sample 9.
FIG. 21 shows a graph of the generation ratio of a position of delamination.
FIG. 22 shows a schematic diagram of an example of a spinning device for producing spider silk fibroin fibers.
FIG. 23 shows schematic diagrams of configurations of samples.
FIG. 24 shows a diagram of fracture energy in the three-point bending tests.

### DESCRIPTION OF EMBODIMENTS

Hereinafter, embodiments of the present invention will be described by reference to the drawings. The present invention is not limited to the embodiments described herein.

### "Laminate"

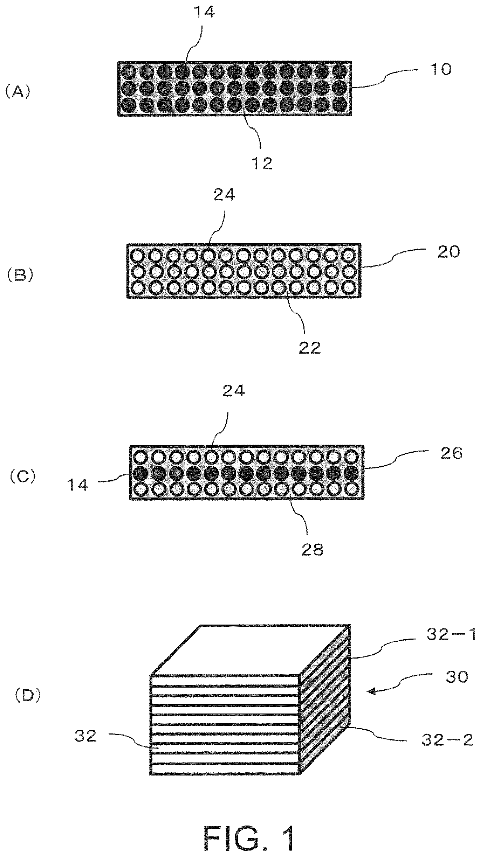

FIG. 1 shows a laminate 30 which is one aspect of the fiber-reinforced resin material according to the present embodiment. A carbon fiber-reinforced resin prepreg 10 is shown in FIG. 1(A), and high-rigidity fibers 14 (fiber material) made of carbon fibers or the like are contained in a resin 12. The high-rigidity fibers 14 need not necessarily be aligned, but in the example of this figure, all the high-rigidity fibers 14 are aligned in the same direction. By aligning the direction of the fibers, bending strength, tensile strength, and the like in the longitudinal direction of the fibers are increased. In the figure, the fibers are drawn large to make it easy to see. In practice, a large number of fibers are contained.

Here, the high-rigidity fiber 14 is preferably at least one of an aramid fiber, a PBO fiber, a glass fiber, and a carbon fiber. In particular, the high-rigidity fiber 14 is preferably a fiber with an initial elastic modulus of 30 GPa or more. The above-mentioned aramid fiber, PBO fiber, glass fiber, and carbon fiber are fibers with an initial elastic modulus of 30 GPa or more.

A fibroin fiber-reinforced resin prepreg 20 is shown in FIG. 1(B), and fibroin fibers 24 (fiber material) are contained in a resin 22. In this example, the fibroin fibers 24 are aligned in the same direction.

A mixed fiber-reinforced resin prepreg 26 is shown in FIG. 1(C), and the high-rigidity fibers 14 and the fibroin fibers 24 are contained in a resin 28. In this example, the high-rigidity fibers 14 and the fibroin fibers 24 are aligned in the same direction. Also, although the high-rigidity fibers 14 are located inside and the fibroin fibers 24 are located on the surface side, the fibers may be uniformly mixed without being limited thereto, and any ratio is possible for the content ratio of both fibers. By arranging many fibroin fibers 24 on the surface side as shown in FIG. 1(C), the strength against bending can be effectively increased.

FIG. 1(D) shows, as a fiber-reinforced resin layer 32, the laminate 30 obtained by laminating and bonding a plurality of carbon fiber-reinforced resin layers 32-1 formed from the carbon fiber-reinforced resin prepreg 10 and fibroin fiber-reinforced resin layers 32-2 formed from the fibroin fiber-reinforced resin prepreg 20. Which fiber-reinforced resin layer 32 is to be the carbon fiber-reinforced resin layer 32-1 or the fibroin fiber-reinforced resin layer 32-2 and which ratio is increased can be selected according to the application and the like. The mixed fiber-reinforced resin prepreg 26 may be appropriately arranged, or all may be the mixed fiber-reinforced resin prepreg 26.

Here, as the high-rigidity fiber 14, various commercially available ones can be adopted. In addition, as the fibroin fibers 24, silks, spider threads, and the like are widely known, and fibers produced by bees, worms, and the like may be used, and artificial fibroin fibers as described in Patent Documents 1 to 3 may also be used. That is, as the fibroin fiber 24, a fibrous protein which is smaller than the high-rigidity fiber 14 but has a certain degree of strength and is more flexible than the high-rigidity fiber 14 (which has a large amount of deformation against load) can be adopted.

In particular, spider silk is greater in strength and deformation amount than silk yarn. Therefore, spider silk fibroin fibers such as spider silk and artificial spider silk are considered to be particularly suitable.

Further, for the resins 12 and 22, although an epoxy resin which is a thermosetting resin is preferable, polyester, a mixed resin of these, or the like may be used. Furthermore, thermoplastic resins can also be used.

As described above, the laminate 30 according to the present embodiment is formed by laminating and bonding the carbon fiber-reinforced resin layers 32-1 and the fibroin fiber-reinforced resin layers 32-2. Usually, a carbon fiber-reinforced resin prepreg 10 and a fibroin fiber-reinforced resin prepreg 20 are laminated, and heated and cured to form a laminate 30.

In the laminate 30, the carbon fiber-reinforced resin layer 32-1 contains the high-rigidity fibers 14 and has high strength. That is, although the amount of deformation against input of load is relatively small, it can also withstand large loads. On the other hand, although the fibroin fiber-reinforced resin layer 32-2 contains the fibroin fibers 24, and the load that can be withstood smaller is than that of the carbon fiber-reinforced resin layer 32-1, the amount of deformation against load is large.

Then, although the laminate 30 obtained by laminating and bonding both the carbon fiber-reinforced resin layer 32-1 and the fibroin fiber-reinforced resin layer 32-2 has a maximum load that can be withstood smaller than that of a laminate of only the carbon fiber-reinforced resin layer 32-1, it can withstand relatively large loads and the deformation amount at that time is large. Therefore, in the laminate 30, the absorption capacity such as impact is improved as compared with the laminate using only the carbon fiber-reinforced resin layer 32-1.

In the case of preparing the laminate 30, first, the high-rigidity fibers 14 are impregnated in the liquid resin 12 and semi-cured to prepare the plate-like carbon fiber-reinforced resin prepreg 10. Further, the fibroin fibers 24 are impregnated in the liquid resin 22 and semi-cured to prepare the plate-like fibroin fiber-reinforced resin prepreg 20.

The carbon fiber-reinforced resin prepreg 10 containing the high-rigidity fibers 14 and the fibroin fiber-reinforced resin prepreg 20 containing the fibroin fibers 24 are appropriately laminated to form the laminate 30. The laminate 30 is in the form of a plate as it is, but can be formed into various shapes; for example, it can be also formed into a round rod shape by rolling.

In the above example, the carbon fiber-reinforced resin prepreg 10 containing the high-rigidity fibers 14 and the fibroin fiber-reinforced resin prepreg 20 containing the fibroin fibers 24 are separately prepared, but the laminate 30 may be formed by laminating and bonding the mixed fiber-reinforced resin prepreg 26 containing both the high-rigidity fibers and the fibroin fibers. That is, other fibers such as fibroin fibers may be mixed with the carbon fiber-reinforced resin prepreg 10 containing the high-rigidity fibers 14, and other fibers such as high-rigidity fibers may be mixed with the fibroin fiber-reinforced resin prepreg 20 containing the fibroin fibers 24. Alternatively, both a prepreg containing only one of the fibers and a prepreg containing both fibers may be prepared, and these may be combined appropriately and laminated. Furthermore, each fiber may be a short fiber or a long fiber. The laminate 30 may be formed by filament winding molding.

### (Spider silk fibroin fiber)

As mentioned above, spider silk fibroin fibers are particularly suitable as fibroin fibers. Therefore, this spider silk fibroin fiber will be described.

The spider silk fibroin may contain a spider silk polypeptide selected from the group consisting of natural spider silk proteins and polypeptides derived from the natural spider silk proteins (artificial spider silk proteins).

Examples of the natural spider silk protein include a major dragline silk protein, a weft yarn protein, and a minor ampullate gland protein. Since the major dragline silk has a repeated region composed of a crystalline region and an amorphous region (also referred to as a formless region), it has both high stress and stretchability. The weft yarn of the spider silk has a feature that it has no crystalline region and has a repeated region composed of an amorphous region. The weft yarn is inferior in stress as compared with the major dragline silk, but has high stretchability.

The major dragline silk protein is produced in the spider's major ampullate gland and has a feature of being excellent in toughness. Examples of the major dragline silk protein include the major ampullate gland spidroins MaSp1 and MaSp2 derived from Nephila clavipes, and ADF3 and ADF4 derived from Araneus diadematus. ADF3 is one of the two main silk ribbon thread proteins of Araneus diadematus. The polypeptide derived from the natural spider silk protein may be a polypeptide derived from these silk ribbon thread proteins. Polypeptides derived from ADF3 are relatively easy to synthesize and have excellent characteristics in terms of strength and elongation and toughness.

The weft yarn protein is produced in the spider's flagelliform gland. Examples of the weft yarn protein include flagelliform silk proteins derived from *Nephila clavipes.*

The polypeptide derived from the natural spider silk protein may be a recombinant spider silk protein. Examples of the recombinant spider silk protein include variants, analogs, or derivatives of the natural spider silk proteins, and the like. One suitable example of such polypeptide is a recombinant spider silk protein of the major dragline silk protein (also referred to as "polypeptide derived from a major dragline silk protein").

Examples of a protein derived from the major dragline silk that is a fibroin-like protein include proteins containing a domain sequence represented by Formula 1: [(A)n motif-REP]m. Here, in Formula 1, the (A)n motif indicates an amino acid sequence mainly containing alanine residues, and n may be an integer of 2 to 20, preferably 4 to 20, more preferably 8 to 20, further preferably 10 to 20, still more preferably 4 to 16, even more preferably 8 to 16, and particularly preferably 10 to 16. The ratio of the number of alanine residues to the total number of amino acid residues in (A)n motif may be 40% or more, preferably 60% or more, more preferably 70% or more, further preferably 80% or more, still more preferably 90% or more, and may be 100% (meaning consisting of only alanine residues). REP represents an amino acid sequence consisting of 2 to 200 amino acid residues. m represents an integer of 2 to 300. A plurality of (A)n motifs may be amino acid sequences identical to each other or amino acid sequences different from each other. A plurality of REPs may be amino acid sequences identical to each other or amino acid sequences different from each other. Specific examples of the protein derived from the major dragline silk include proteins containing amino acid sequences represented by SEQ ID NO: 1 and SEQ ID NO: 2.

Examples of a protein derived from the weft yarn protein include proteins containing a domain sequence represented by Formula 2: [REP2]o (wherein REP2 represents an amino acid sequence consisting of Gly-Pro-Gly-Gly-X, and X represents an amino acid selected from the group consisting of alanine (Ala), serine (Ser), tyrosine (Tyr), and valine (Val). o represents an integer of 8 to 300.). Specific examples include a protein containing an amino acid sequence represented by SEQ ID NO: 3. The amino acid sequence represented by SEQ ID NO: 3 is an amino acid sequence obtained by combining a repeat portion and an amino acid sequence (referred to as PR1 sequence) from the 1220th residue to the 1659th residue from the N-terminal which corresponds to a motif, of a partial sequence (NCBI Accession Number: AAF36090, GI: 7106224) of the flagelliform silk protein of *Nephila clavipes* obtained from the NCBI database, with a C-terminal amino acid sequence from the 816th residue to the 907th residue from the C-terminal of a partial sequence (NCBI Accession Number: AAC38847, GI: 2833649) of the flagelliform silk protein of *Nephila clavipes* obtained from the NCBI database, and adding, to the N-terminal of the combined sequence, the amino acid sequence (tag sequence and hinge sequence) represented by SEQ ID NO: 4.

A fiber composed of spider silk fibroin; that is, a protein contained as a main component in spider silk fibroin fiber, can be produced, for example, by expressing a nucleic acid by a nucleic acid sequence encoding the protein, and a host transformed with an expression vector having one or more regulatory sequences operably linked to the nucleic acid sequence.

No particular limitation is imposed on a method for producing the nucleic acid encoding the protein contained as a main component in spider silk fibroin fiber. For example, the nucleic acid can be produced by a method of cloning the gene by amplification thereof by polymerase chain reaction (PCR) or the like, using a gene encoding a natural structural protein, or a method of chemical synthesis. The chemical synthesis method of the nucleic acid is also not particularly limited, and for example, the gene can be chemically synthesized by a method of linking oligonucleotides, which are automatically synthesized by AKTA oligopilot plus 10/100 (GE Healthcare Japan Co., Ltd) or the like, using PCR or the like, based on amino acid sequence information of the structural protein obtained from the NCBI's web database or the like. In this case, in order to facilitate purification and/or identification of the protein, there may be synthesized a nucleic acid encoding a protein consisting of an amino acid sequence obtained by adding an amino acid sequence consisting of a start codon and a His10 tag to the N-terminal of the above amino acid sequence.

The regulatory sequence is a sequence (for example, a promoter, an enhancer, a ribosome binding sequence, a transcription termination sequence, etc.) that controls expression of a recombinant protein in a host, and can be appropriately selected depending on the type of host. As a promoter, an inducible promoter that functions in a host cell and is capable of inducing expression of a target protein may be used. An inducible promoter is a promoter that can control transcription due to the presence of an inducer (expression inducer), the absence of a repressor molecule, or physical factors such as an increase or decrease in temperature, osmotic pressure, or pH value.

The type of the expression vector such as a plasmid vector, a viral vector, a cosmid vector, a fosmid vector, or an artificial chromosome vector can be appropriately selected depending on the type of the host. As the expression vector, there is suitably used an expression vector which can autonomously replicate in a host cell or can be incorporated into a chromosome of the host and which contains a promoter at a position capable of transcribing a nucleic acid encoding a target protein.

As the host, both prokaryotes and eukaryotes such as yeast, filamentous fungi, insect cells, animal cells and plant cells can be suitably used.

Preferred examples of prokaryotic hosts include microorganisms belonging to the genus Escherichia, Brevibacillus, Serratia, Bacillus, Microbacterium, Brevibacterium, Corynebacterium, and Pseudomonas. Examples of microorganisms belonging to the genus Escherichia include *Escherichia coli* and the like. Examples of microorganisms belonging to the genus Brevibacillus include *Brevibacillus agri* and the like. Examples of microorganisms belonging to the genus Serratia include *Serratia liquofaciens* and the like. Examples of microorganisms belonging to the genus Bacillus include *Bacillus subtilis* and the like. Examples of microorganisms belonging to the genus Microbacterium include *Microbacterium ammoniaphilum* and the like. Examples of microorganisms belonging to the genus Brevibacterium include *Brevibacterium divaricatum* and the like. Examples of microorganisms belonging to the genus Corynebacterium include *Corynebacterium ammoniagenes* and the like. Examples of microorganisms belonging to the genus Pseudomonas include *Pseudomonas putida* and the like.

When a prokaryote is used as the host, examples of vectors for introducing a nucleic acid encoding a target protein include pBTrp2 (manufactured by Boehringer Mannheim GmbH), pGEX (manufactured by Pharmacia Corporation), pUC18, pBluescriptII, pSupex, pET22b, pCold, pUB110, pNCO2 (JP 2002-238569 A), and the like.

Examples of eukaryotic hosts include yeast and filamentous fungi (molds and the like). Examples of the yeast include yeasts belonging to the genus Saccharomyces, Pichia, Schizosaccharomyces, and the like. Examples of the filamentous fungi include fungi belonging to the genus Aspergillus, Penicillium, Trichoderma, and the like.

When a eukaryote is used as the host, examples of vectors into which a nucleic acid encoding a target protein is introduced include YEP13 (ATCC37115), YEp24 (ATCC37051), and the like. As a method of introducing an expression vector into the host cell, any method can be used so long as it introduces DNA into the host cell. Examples thereof include a method using calcium ions [Proc. Natl. Acad. Sci. USA, 69, 2110 (1972)], an electroporation method, a spheroplast method, a protoplast method, a lithium acetate method, a competent method, and the like.

As a method for expressing a nucleic acid by a host transformed with an expression vector, in addition to direct expression, secretory production, fusion protein expression, or the like can be carried out according to the method described in Molecular Cloning, 2nd Edition, or the like.

A protein can be produced, for example, by culturing a host transformed with an expression vector in a culture medium, producing and accumulating the protein in the culture medium, and collecting the protein from the culture medium. The method for culturing the host in a culture medium can be carried out according to a method commonly used for culturing a host.

In the case where the host is a prokaryote such as *E. coli* or a eukaryote such as yeast, any of a natural medium and a synthetic medium may be used as a culture medium so long as it contains a carbon source, a nitrogen source, inorganic salts, and the like which can be assimilated by the host and it is capable of efficiently culturing the host.

As the carbon source, any carbon source that can be assimilated by the above transformed microorganism may be used, and for example, carbohydrates such as glucose, fructose, sucrose, and molasses, starch and starch hydrolyzates containing them, organic acids such as acetic acid and propionic acid, and alcohols such as ethanol and propanol can be used. As the nitrogen source there can be used, for example, ammonium salts of inorganic or organic acids such as ammonia, ammonium chloride, ammonium sulfate, ammonium acetate, and ammonium phosphate, other nitrogen-containing compounds, and peptone, meat extract, yeast extract, corn steep liquor, casein hydrolyzate, soybean cake and soybean cake hydrolyzate, various fermented bacterial cells and digested products thereof. As the inorganic salt there can be used, for example, potassium dihydrogen phosphate, dipotassium phosphate, magnesium phosphate, magnesium sulfate, sodium chloride, ferrous sulfate, manganese sulfate, copper sulfate, and calcium carbonate.

Culture of a prokaryote such as *E. coli* or a eukaryote such as yeast can be carried out, for example, under aerobic conditions such as shake culture or deep aeration stirring culture. The culture temperature is, for example, 15°C to 40°C. The culture time is usually 16 hours to 7 days. It is preferable to maintain the pH of the culture medium during the culture at 3.0 to 9.0. The pH of the culture medium can be adjusted using an inorganic acid, an organic acid, an alkali solution, urea, calcium carbonate, ammonia, or the like.

In addition, antibiotics such as ampicillin and tetracycline may be added to the culture medium as necessary during the culture. In the case of culturing a microorganism transformed with an expression vector using an inducible promoter as a promoter, an inducer may be added to the medium as necessary. For example, in the case of culturing a microorganism transformed with an expression vector using a lac promoter, isopropyl-β-D-thiogalactopyranoside or the like is used, and in the case of culturing a microorganism transformed with an expression vector using a trp promoter, indole acrylic acid or the like may be added to the medium.

The expressed protein can be isolated and purified by a commonly used method. For example, in the case where the protein is expressed in a dissolved state in cells, host cells are recovered by centrifugation after completion of the culture, suspended in an aqueous buffer solution, and then disrupted using an ultrasonicator, a French press, a Manton-Gaulin homogenizer, a Dyno-Mill, or the like to obtain a cell-free extract. From the supernatant obtained by centrifuging the cell-free extract, a purified preparation can be obtained by a method commonly used for protein isolation and purification; that is, a solvent extraction method, a salting-out method using ammonium sulfate or the like, a desalting method, a precipitation method using an organic solvent, an anion exchange chromatography method using a resin such as diethylaminoethyl (DEAE)-Sepharose or DIAION HPA-75 (manufactured by Mitsubishi Kasei Kogyo Kabushiki Kaisha), a cation exchange chromatography method using a resin such as S-Sepharose FF (manufactured by Pharmacia Corporation), a hydrophobic chromatography method using a resin such as butyl sepharose or phenyl sepharose, a gel filtration method using a molecular sieve, an affinity chromatography method, a chromatofocusing method, an electrophoresis method such as isoelectric focusing or the like, alone or in combination.

Also, in the case where the protein is expressed by formation of an insoluble matter in the cell, similarly, the host cells are recovered, disrupted, and centrifuged to recover the insoluble matter of the protein as a precipitated fraction. The recovered insoluble matter of the protein can be solubilized with a protein denaturing agent. After this operation, a purified preparation of protein can be obtained by the same isolation and purification method as described above. In the case where the protein is secreted extracellularly, the protein can be recovered from the culture supernatant. That is, a culture supernatant is obtained by treating the culture by a technique such as centrifugation, and a purified preparation can be obtained from the culture supernatant by using the same isolation and purification method as described above.

Spider silk fibroin fiber is obtained by spinning the above-mentioned protein. Preferably, the spider silk fibroin fiber is formed by spinning a polypeptide derived from natural spider silk protein (artificial spider silk protein). The spider silk fibroin fiber can be produced by known spinning methods. That is, for example, when producing spider silk fibroin fibers, first, spider silk fibroin produced according to the above-mentioned method is added to a solvent such as dimethyl sulfoxide (DMSO), N,N-dimethylformamide (DMF), or hexafluoroisopropanol (HFIP) together with an inorganic salt as a dissolution accelerator, and dissolved to prepare a dope solution. Then, using this dope solution, spinning can be performed by a known spinning method such as wet spinning, dry spinning, or dry-wet spinning to obtain target spider silk fibroin fibers.

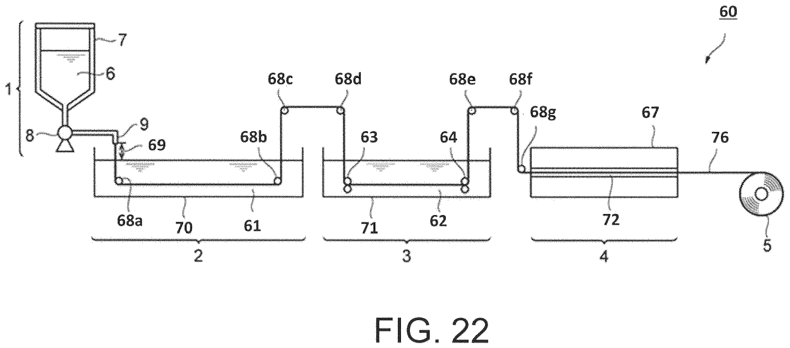

FIG. 22 is a schematic diagram showing an example of a spinning device for producing spider silk fibroin fibers. A spinning device 60 shown in FIG. 22 is an example of a spinning device for dry-wet spinning, and has an extrusion apparatus 1, a coagulation apparatus 2, a washing apparatus 3, and a drying apparatus 4 in this order from the upstream side.

The extrusion apparatus 1 has a storage tank 7, in which a dope solution (spinning stock solution) 6 is stored. The coagulation apparatus 2 has a coagulation bath 70, in which a coagulation liquid 61 (for example, methanol) is stored. The dope solution 6 is extruded from a nozzle 9 provided with an air gap 69 open between the dope solution 6 and the coagulation liquid 61 by a gear pump 8 attached to the lower end of the storage tank 7. The extruded dope solution 6 is supplied into the coagulation liquid 61 through the air gap 69. The solvent is removed from the dope solution 6 in the coagulation liquid 61 to coagulate protein. The coagulated protein is guided to a washing bath 71 of the washing apparatus 3 and washed with a washing solution 62 in the washing bath 71, and then sent to the drying apparatus 4 by a first nip roller 63 and a second nip roller 64 installed in the washing bath 71. At this time, for example, when a rotational speed of the second nip roller 64 is set to be faster than a rotational speed of the first nip roller 63, a spider silk fibroin fiber 76 drawn at a magnification corresponding to the rotational speed ratio is obtained. The spider silk fibroin fibers drawn in the washing solution 62 are released from the washing bath 71, dried when passing through the drying apparatus 4, and then wound up with a winder. In this way, spider silk fibroin fibers are obtained by the spinning device 60 as a roll 5 which is finally wound around the winder. Reference numerals 68a to 68g denote yarn guides. The drying apparatus 4 is composed of a case 67 surrounding the circumference and a heater 72, and the spider silk fibroin fiber is dried by heat from the heater 72.

The coagulation liquid 61 may be any solution capable of removing the solvent, and examples thereof include lower alcohols having 1 to 5 carbon atoms such as methanol, ethanol, and 2-propanol, and acetone and the like. The coagulation liquid 61 may contain water as appropriate. The temperature of the coagulation liquid 61 is preferably 0°C to 30°C. The distance of the coagulated protein passing through the coagulation liquid 61 (substantially, the distance from the yarn guide 68a to the yarn guide 68b) may be any length that enables efficient solvent removal, such as 200 to 500 mm. The residence time in the coagulation liquid 61 may be, for example, 0.01 to 3 minutes, and is preferably 0.05 to 0.15 minutes. Further, drawing (pre-drawing) may be carried out in the coagulation liquid 61.

The drawing performed in the washing bath 71 when obtaining spider silk fibroin fibers may be so-called wet heat drawing carried out in warm water, in a solution obtained by adding an organic solvent or the like to warm water. The temperature of the wet heat drawing may be, for example, 50°C to 90°C, and is preferably 75°C to 85°C. In the wet heat drawing, an undrawn yarn (or pre-drawn yarn) can be drawn, for example, 1 to 10 times, and is preferably drawn 2 to 8 times.

The lower limit value of the final draw ratio is preferably any of more than 1 time, 2 times or more, 3 times or more, 4 times or more, 5 times or more, 6 times or more, 7 times or more, 8 times or more, or 9 times or more, with respect to the undrawn yarn (or pre-drawn yarn), and the upper limit is preferably 40 times or less, 30 times or less, 20 times or less, 15 times or less, 14 times or less, 13 times or less, 12 times or less, 11 times or less, or 10 times or less.

### [Production of Spider Silk Fibroin Fibers]

Next, an example of a specific method for producing spider silk fibroin fibers will be described.

### <(1) Production of spider silk fibroin (PRT799)>

### (Synthesis of gene encoding spider silk fibroin, and construction of expression vector)

A modified spider silk fibroin (PRT799) having the amino acid sequence represented by SEQ ID NO: 2 was designed.

The amino acid sequence represented by SEQ ID NO: 2 is an amino acid sequence in which a His tag is added to the C-terminal of a sequence obtained by repeating a region of 20 domain sequences present in the amino acid sequence represented by SEQ ID NO: 1 (provided that several amino acid residues at the C-terminal side of the region are substituted.) for 4 times, added with the amino acid sequence (containing a His tag) represented by SEQ ID NO: 4 at the N-terminal.

Next, a nucleic acid encoding PRT799 was synthesized. In the nucleic acid, an Ndel site was added to the 5' end and an EcoRI site was added downstream of the stop codon. The nucleic acid was cloned into a cloning vector (pUC118). Thereafter, the same nucleic acid was cleaved by restriction enzyme treatment with Ndel and EcoRI, and then recombined into a protein expression vector pET-22b(+) to obtain an expression vector.

*E. coli* BLR (DE3) was transformed with a pET22b(+) expression vector containing a nucleic acid encoding PRT799. The transformed *E. coli* was cultured in 2 mL of LB medium containing ampicillin for 15 hours The culture solution was added to 100 mL of a seed culture medium (Table 1) containing ampicillin so that the OD600 was 0.005. The temperature of the culture solution was maintained at 30°C, and flask culture was carried out (for about 15 hours) until the OD600 reached 5 to obtain a seed culture solution.

**[Table 1]**

| SEED CULTURE MEDIUM | |
|---|---|
| Reagent | Concentration (g/L) |
| Glucose | 5.0 |
| KH₂PO₄ | 4.0 |
| K₂HPO₄ | 9.3 |
| Yeast Extract | 6.0 |
| Ampicillin | 0.1 |

The seed culture solution was added to a jar fermenter to which 500 ml of a production medium (Table 2 below) had been added so that the OD 600 was 0.05. The culture was carried out while maintaining the culture solution temperature at 37°C and keeping the pH constant at 6.9. Further, the dissolved oxygen concentration in the culture solution was maintained at 20% of the dissolved oxygen saturation concentration.

**[Table 2]**

| PRODUCTION MEDIUM | |
|---|---|
| Reagent | Concentration (g/L) |
| Glucose | 12.0 |
| KH₂PO₄ | 9.0 |
| MgSO₄ • 7H₂O | 2.4 |
| Yeast Extract | 15 |
| FeSO₄ • 7H₂O | 0.04 |
| MnSO₄ • 5H₂O | 0.04 |
| CaCl₂ • 2H₂O | 0.04 |
| ADEKA NOL (ADEKA, LG-295S) | 0.1(mL/L) |

Immediately after glucose in the production medium was completely consumed, a feed solution (455 g/1 L of glucose, 120 g/1 L of Yeast Extract) was added at a rate of 1 mL/min. The culture was carried out while maintaining the culture solution temperature at 37°C and keeping the pH constant at 6.9. Further, the dissolved oxygen concentration in the culture solution was maintained at 20% of the dissolved oxygen saturation concentration, and the culture was carried out for 20 hours. Thereafter, 1 M isopropyl-β-thiogalactopyranoside (IPTG) was added to the culture solution to a final concentration of 1 mM to induce expression of PRT799. Twenty hours after addition of IPTG, the culture solution was centrifuged to recover bacterial cells. SDS-PAGE was carried out using the bacterial cells prepared from the culture solution before the addition of IPTG and after the addition of IPTG, and the expression of PRT799 was confirmed by the appearance of a band having a size corresponding to PRT799 depending on the addition of IPTG.

### (Purification of PRT799)

The bacterial cells recovered 2 hours after the addition of IPTG were washed with a 20 mM Tris-HCl buffer solution (pH 7.4). The bacterial cells after washing were suspended in a 20 mM Tris-HCl buffer solution (pH 7.4) containing about 1 mM PMSF, and the cells were disrupted with a high-pressure homogenizer (GEA Niro Soavi SpA). The disrupted cells were centrifuged to obtain a precipitate. The obtained precipitate was washed with a 20 mM Tris-HCl buffer solution (pH 7.4) until reaching high purity. The precipitate after washing was suspended in a 8 M guanidine buffer solution (8 M guanidine hydrochloride, 10 mM sodium dihydrogen phosphate, 20 mM NaCl, 1 mM Tris-HCl, pH 7.0) so as to have a concentration of 100 mg/mL, and dissolved by stirring with a stirrer at 60°C for 30 minutes. After dissolution, dialysis was carried out with water using a dialysis tube (cellulose tube 36/32 manufactured by Sanko Junyaku Co., Ltd.). The white aggregated protein (PRT799) obtained after dialysis was recovered by centrifugation, the water content was removed with a freeze dryer, and the freeze-dried powder was recovered.

The degree of purification of PRT799 in the freeze-dried powder thus obtained was confirmed by image analysis of polyacrylamide gel electrophoresis results of the powder using Totallab (Nonlinear Dynamics Ltd.). As a result, the purity of PRT799 was found to be about 85%.

### <(2) Production of spider silk fibroin fiber> (Preparation of dope solution)

After the spider silk fibroin (PRT799) mentioned above was added to dimethyl sulfoxide (DMSO) to a concentration of 24% by mass, LiCl was added at a concentration of 4.0% by mass as a dissolution accelerator, and then dissolved for 3 hours using a shaker. Thereafter, dust and foam were removed to prepare a dope solution. The solution viscosity of the dope solution was 5000 cP (centipoise) at 90°C.

### (Spinning)

A known dry-wet spinning method was performed using the dope solution obtained as described above and the spinning device 60 shown in FIG. 22 to obtain a monofilament of spider silk fibroin. Here, dry-wet spinning was performed under the following conditions.
Coagulation liquid (methanol) temperature: 2°C
Drying temperature: 80°C
Air gap length: 5 mm

### [Example 1-1]

Samples of the laminate 30 according to the above embodiment, a laminate using only carbon fibers as a comparative example, and a laminate using only fibroin fibers were produced, and performance was evaluated.

### <Samples>

### (Fibers)

Commercially available carbon fibers were used as the carbon fibers. Also, silk yarn was used as the fibroin fibers.

### (Prepregs)

A large number of fibers were drawn in parallel and impregnated into an epoxy resin to form a plate-like prepreg containing unidirectional fibers. The fiber content was set to 65% by weight.

### (Laminates)

Ten sheets of the prepregs were laminated, heated to 130°C, and thermally cured to form a laminate. The thickness of one layer of the fiber-reinforced resin layer 32 of the laminate 30 was 0.2 mm, for a total thickness of 2 mm. The directions of fibers in each layer were all set in the same direction. The sample for interlaminar shear test was 20 mm (fiber direction) × 10 mm, and the sample for the three-point bending test was 100 mm (fiber direction) × 15 mm.

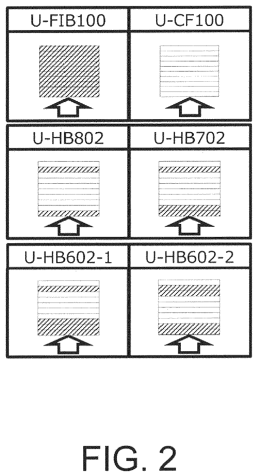

FIG. 2 shows configurations of each sample. U-FIB100 is a comparative example in which only 10 prepregs of fibroin fibers are laminated, U-CF100 is a comparative example in which only 10 prepregs of carbon fibers are laminated, U-HB802 is an example of prepregs containing 80% of carbon fibers (layers of fibroin fibers in first and ninth layers from the bottom), U-HB702 is an example of a prepregs containing 70% of carbon fibers (layers of fibroin fibers in first, second, and ninth layers from the bottom), and U-HB602 are examples of a prepregs containing 60% of carbon fibers, in which U-HB602-1 contains layers of fibroin fibers in first, second, third, and ninth layers from the bottom, and U-HB602-2 contains layers of fibroin fibers in first, second, eighth, and ninth layers from the bottom.

### <Physical property evaluation tests>

As physical property evaluation tests, "interlaminar shear test" and "three-point bending test" were performed.

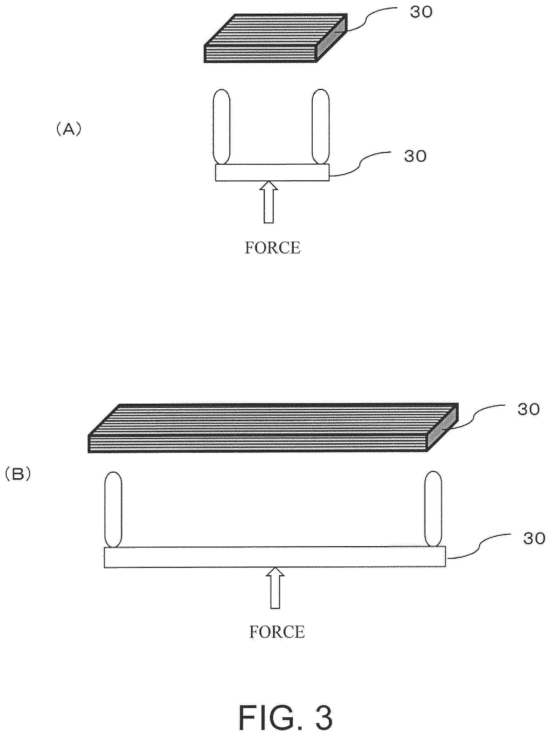

The "interlaminar shear test" was conducted according to JIS K 7057 (Fiber-reinforced plastic composites - Determination of apparent interlaminar shear strength by short-beam method). As shown in FIG. 3(A), a sample was pressed at both ends and an indenter was pressed against the sample from the vicinity of the center at a speed of 1 mm/sec, then load-displacement was measured, and interlaminar shear state was observed by a cross-sectional photograph.

The "three-point bending test" was conducted according to JIS K7074 (bending test method for carbon fiber-reinforced plastic). As shown in FIG. 3(B), a sample was pressed at both ends and an indenter was pressed against the sample from the vicinity of the center at a speed of 5 mm/sec, then load-displacement was measured.

### <Interlaminar shear test result>

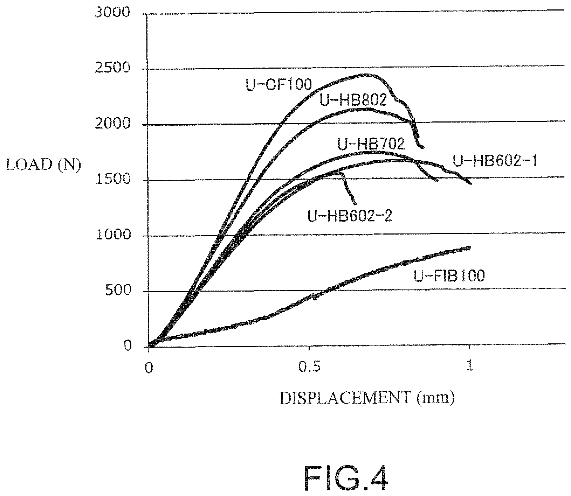

FIG. 4 shows relationships between the displacement and the load of each sample in the interlaminar shear tests. As described above, as the fibroin fiber-reinforced resin layer 32-2 increases, the load with respect to the displacement decreases.

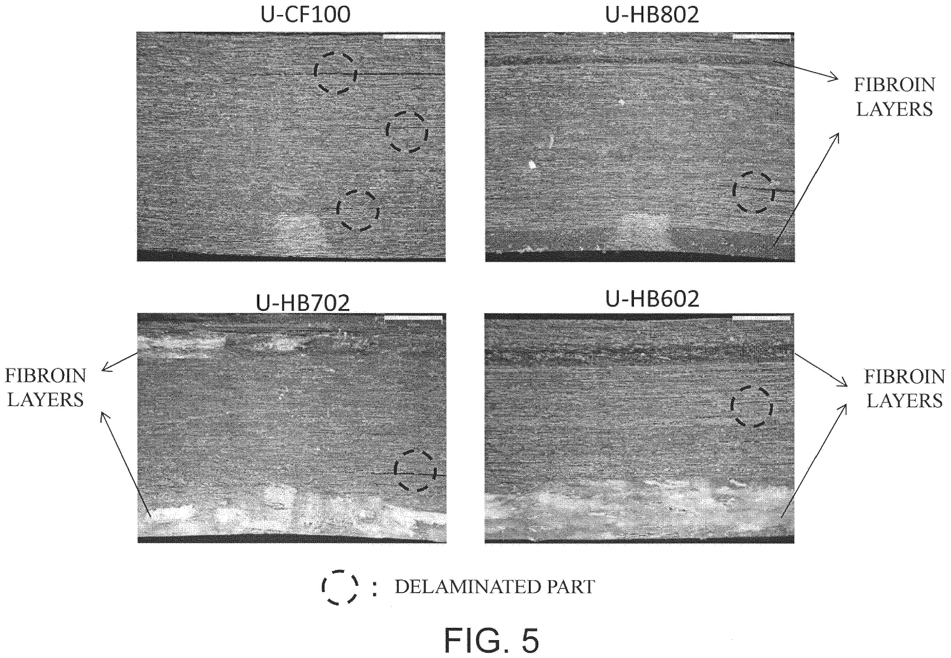

The cross-sectional photographs of each sample are shown in FIG. 5. As described above, delamination can be reduced by adding the fibroin fiber-reinforced resin layer 32-2. In particular, delamination occurs between layers of the carbon fiber-reinforced resin layers 32-1, and little delamination occurs between the fibroin fiber-reinforced resin layer 32-2 and the carbon fiber-reinforced resin layer 32-1, and between layers of the fibroin fiber-reinforced resin layers 32-2. Therefore, it can be seen that the fibroin fiber-reinforced resin layer 32-2 is effective for preventing delamination.

### <Three-point bending test result>

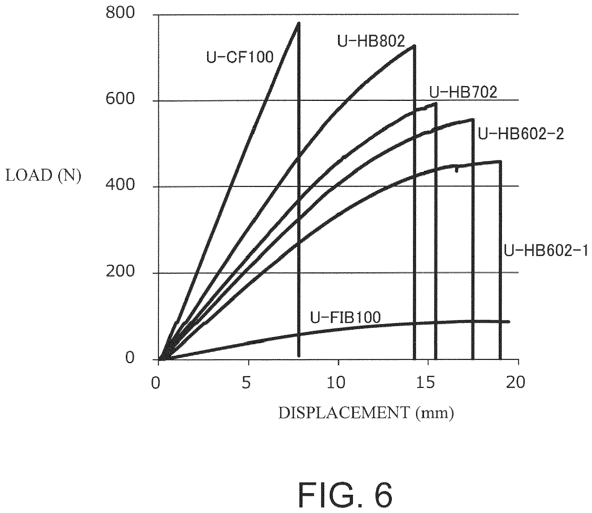

FIG. 6 shows relationships between the displacement and the load of each sample in the three-point bending tests. The maximum displacement is displacement at break. The FIB100 consisting only of the fibroin fiber-reinforced resin layer 32-2 did not break.

As shown here, as the fibroin fiber-reinforced resin layer 32-2 increases, the load with respect to the displacement decreases, but the maximum displacement increases.

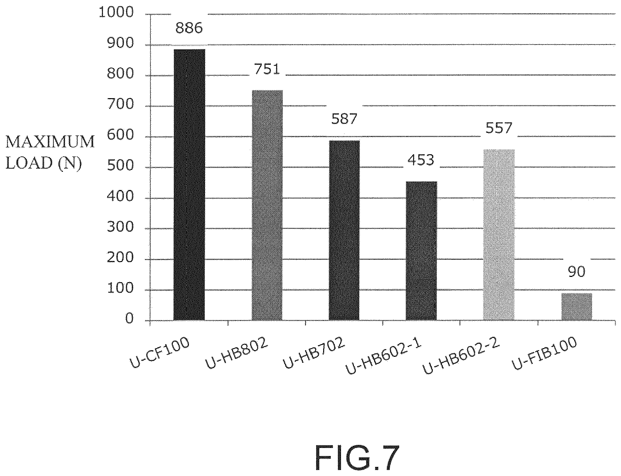

FIG. 7 shows maximum loads which are loads at break for each sample. As shown here, the maximum load of CF100 consisting only of the carbon fiber-reinforced resin layer 32-1 is large, and the maximum load of FIB100 consisting only of the fibroin fiber-reinforced resin layer 32-2 is smallest. In addition, it was found that the maximum displacement largely changes by providing the fibroin fiber-reinforced resin layer 32-2, and the displacement increases. Since FIB 100 did not break in this test, data of displacement up to 18 mm are used.

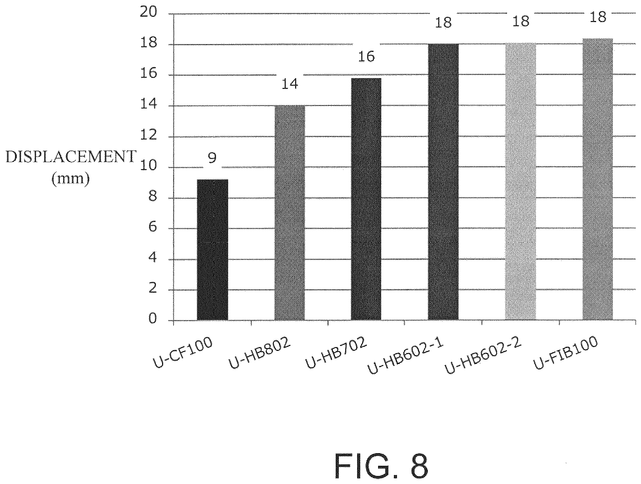

FIG. 8 shows maximum displacement which is displacement at break for each sample. As shown here, as the ratio of the fibroin fiber-reinforced resin layer 32-2 increases, the maximum displacement increases.

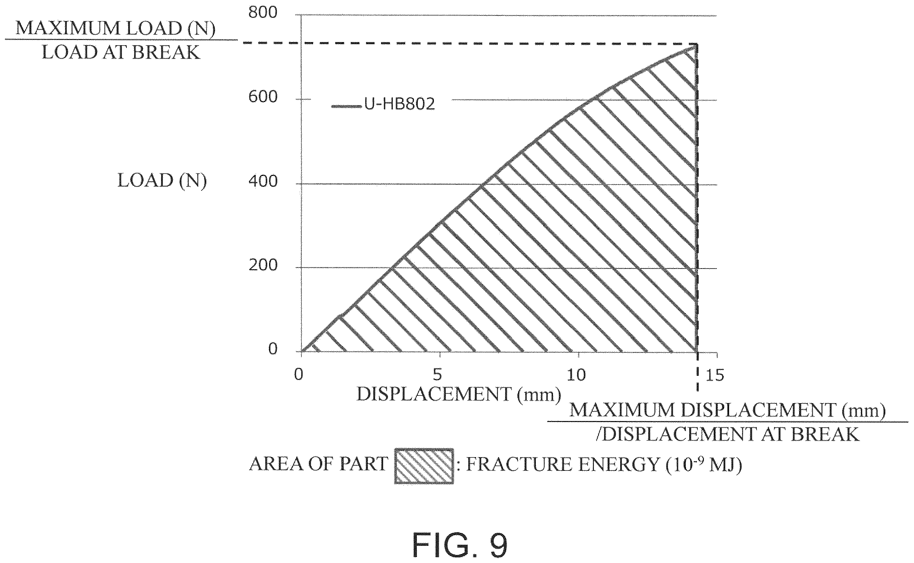

FIG. 9 shows fracture energy (absorbed energy) in HB802. As shown here, the fracture energy corresponds to an area of a portion determined by displacement and load to break.

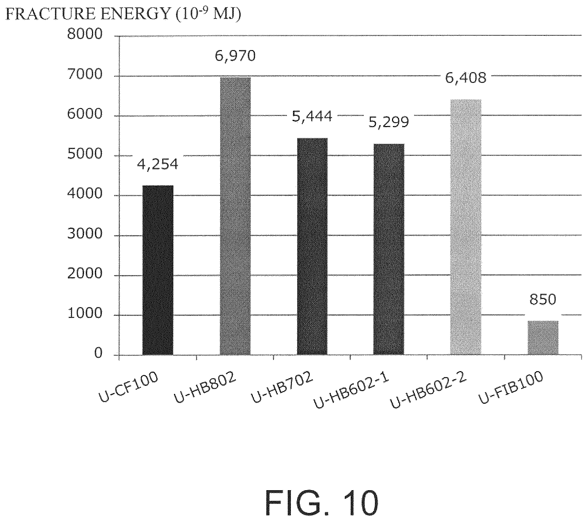

FIG. 10 shows fracture energy (absorbed energy) of each sample obtained as described above. As shown here, in any of HB802, 702, and 602, the fracture energy (absorbed energy) is larger than that of CF100. Based on this, it can be seen that an energy absorbable by the laminate 30 can be increased by using fibroin fibers. That is, toughness is increased.

In the above-mentioned example, silk yarn was used as the fibroin fiber, but it was found that further improved performance can be obtained by using spider silk or the like which has better performance such as strength and maximum displacement.

### [Example 1-2]

### <Samples>

As the fibroin fiber, an example using spider silk fibroin fibers produced by the above-mentioned production method was added. Others are the same as in Example 1-1.

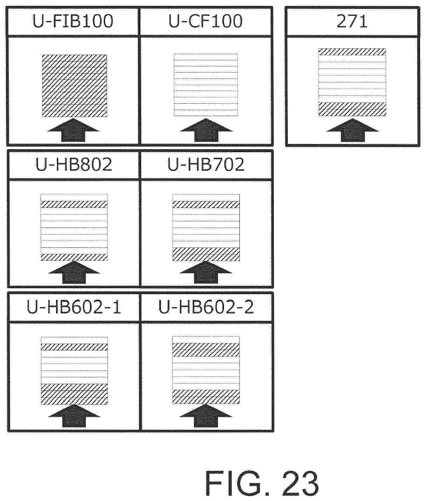

As the laminate 30, ones with the constitutions of FIG. 23 were used. In addition to the samples shown in FIG. 2, tests were performed on 271 (Examples) in which layers of fibroin fibers were arranged in first, second, and tenth layers from the bottom.

### <Evaluation test method>

The test was performed in the same manner as in Example 1-1 mentioned above.

### (Three-point bending test result)

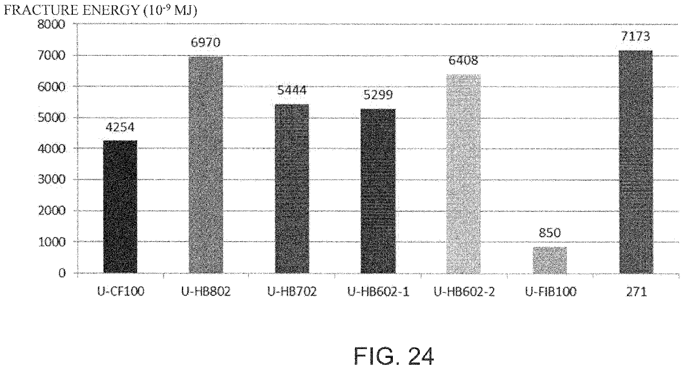

The three-point bending test results are shown in FIG. 24. As shown here, in Example 271 using spider silk fibroin fibers, the fracture energy is greater than all the others. Based on this, it was found that the energy absorbable by the laminate 30 can be increased by using spider silk fibroin fibers.

### "Fiber-reinforced resin coated body"

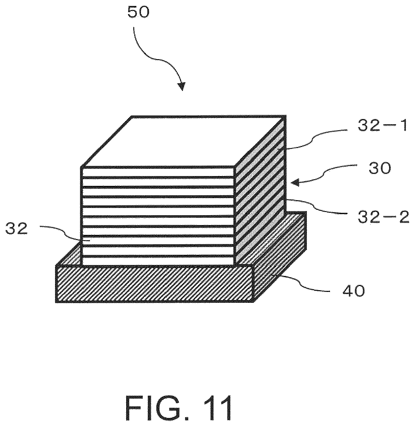

Next, a fiber-reinforced resin coated body in which the above-mentioned laminate 30 is coated on a substrate will be described. FIG. 11 shows a configuration of a fiber-reinforced resin coated body 50 according to the present embodiment. The fiber-reinforced resin coated body 50 is formed by arranging the laminate 30 on a substrate 40.

For example, aluminum or an aluminum alloy is used as the substrate 40. Metals containing aluminum are relatively lightweight but relatively weak in strength and susceptible to deformation by an applied force. Therefore, by reinforcing the substrate 40 with the laminate 30 consisting of the fiber-reinforced resin layer 32, it is possible to obtain the fiber-reinforced resin coated body 50 which is lightweight as a whole and has a high bending strength.

Here, with respect to the fiber-reinforced resin layer 32, performance of the laminate 30 changes depending on how the carbon fiber-reinforced resin layer 32-1 and the fibroin fiber-reinforced resin layer 32-2 are arranged and which ratio is increased.

In the present embodiment, the laminate 30 is arranged on the surface of the substrate 40. Therefore, stress is generated in the laminate 30 in accordance with influence of the deformation of the substrate 40 or the like. Then, in the case where the stress between the layers of the laminate 30 exceeds the durability, delamination occurs. At this time, the stress between the layers is different depending on physical properties of each layer. Although the carbon fiber-reinforced resin layer 32-1 has high strength, the amount of deformation is small accordingly, and there is a high possibility that delamination occurs due to interlayer stress. On the other hand, although the fibroin fiber-reinforced resin layer 32-2 deforms following the deformation of the adjacent layer, the problem is whether the adjacent layer can accept this deformation. For example, in the case where the substrate 40 is largely deformed, when the fibroin fiber-reinforced resin layer 32-2 is arranged adjacent to the substrate 40, the fibroin fiber-reinforced resin layer 32-2 is deformed following the change of the substrate 40, and delamination is unlikely to occur. On the other hand, in the case where there is a carbon fiber-reinforced resin layer 32-1 adjacent to the fibroin fiber-reinforced resin layer 32-2, delamination is likely to occur between the fibroin fiber-reinforced resin layer 32-2 and the carbon fiber-reinforced resin layer 32-1.

Therefore, in the present embodiment, the fibroin fiber-reinforced resin layer 32-2 is adopted as the layer of the laminate 30 adjacent to the substrate 40 with the largest deformation. Further, in order to prevent the delamination of the carbon fiber-reinforced resin layers 32-1, the fibroin fiber-reinforced resin layer 32-2 is arranged also on the side away from the substrate 40.

With such a configuration, it is possible to protect the substrate 40 by suppressing the delamination in the laminate 30 even by the deformation of the substrate 40.

For example, it is preferable to arrange the carbon fiber-reinforced resin layer 32-1 and the fibroin fiber-reinforced resin layer 32-2 alternately or to arrange the fibroin fiber-reinforced resin layer 32-2 more on the substrate 40 side.

In the fiber-reinforced resin coated body 50 according to the present embodiment, the carbon fiber-reinforced resin layer 32-1 and the fibroin fiber-reinforced resin layer 32-2 are laminated and bonded to the laminate 30. In the laminate 30, the carbon fiber-reinforced resin layer 32-1 contains the high-rigidity fibers 14 and has high strength. That is, although the amount of deformation against load is relatively small, the laminate 30 can also withstand a large load. On the other hand, although the fibroin fiber-reinforced resin layer 32-2 contains the fibroin fibers 24, and has a load that can be withstood smaller than the carbon fiber-reinforced resin layer 32-1, the amount of deformation against load is large.

Then, although the laminate 30 obtained by laminating and bonding both the carbon fiber-reinforced resin layer 32-1 and the fibroin fiber-reinforced resin layer 32-2 has a maximum load that can be withstood smaller than a laminate 30 of only the carbon fiber-reinforced resin layer 32-1, it can withstand relatively large loads and the deformation amount at that time is large. Therefore, in the laminate 30, the absorption capacity such as impact is improved as compared with the laminate 30 using only the carbon fiber-reinforced resin layer 32-1. Accordingly, delamination and the like are less likely to occur when the laminate 30 is deformed according to the deformation of the substrate 40.

Further, by arranging the fibroin fiber-reinforced resin layer 32-2 in a layer adjacent to the substrate 40, occurrence of delamination is suppressed following large deformation of the substrate 40. Furthermore, by arranging more fibroin fiber-reinforced resin layers 32-2 on the side closer to the substrate 40, the occurrence of delamination as the entire laminate 30 is suppressed.

### [Example 2]

Samples of the fiber-reinforced resin coated body 50 using the fibroin fiber-reinforced resin layer 32-2 in the layer adjacent to the substrate 40 according to the above embodiment and a fiber-reinforced resin coated body 50 in which the carbon fiber-reinforced resin layer 32-1 is arranged in the layer adjacent to the substrate 40 as a comparative example were prepared, and performance was evaluated. Also, in this experiment, the substrate 40 was omitted, and the deformation of the substrate 40 was simulated by applying a force to the substrate 40 side.

### <Samples>

### (Laminates)

As the laminate 30, the same ones as those in Examples 1-1 and 1-2 mentioned above were adopted.

The following nine types of experimental samples were used. CF means a carbon fiber-reinforced resin layer 32-1 containing carbon fibers, and FIB means a fibroin fiber-reinforced resin layer 32-2 containing fibroin fibers. UD means that fibers are aligned in one direction. Moreover, in each of the samples, ten sheets of fiber-reinforced resin prepregs are used for the laminate 30, and CF90 means nine sheets of carbon fiber-reinforced resin prepregs 10 and one sheet of a fibroin fiber-reinforced resin prepreg 20. Then, those having different arrangement positions of the fibroin fiber-reinforced resin layer 32-2 while the ratio was the same were prepared. The FIB position is a layer position from the substrate 40 side.
Sample 1 (UDCF90): CF90%, FIB 10% FIB position (1)
Sample 2 (UDCF90): CF90%, FIB 10% FIB position (6)
Sample 3 (UDCF90): CF90%, FIB 10% FIB position (9)
Sample 4 (UDCF70): CF70%, FIB 30% FIB position (5 to 7)
Sample 5 (UDCF70): CF70%, FIB 30% FIB position (2, 6, 9)
Sample 6 (UDCF70): CF70%, FIB 30% FIB position (1, 9, 10)
Sample 7 (UDCF50): CF50%, FIB 50% FIB position (1, 3, 5, 7, 9)
Sample 8 (UDCF50): CF50%, FIB 50% FIB position (1 to 5)
Sample 9 (UDCF50): CF50%, FIB 50% FIB position (3 to 7)

### <Physical property evaluation test>

As a physical property evaluation test, "interlaminar shear test" was performed. This "interlaminar shear test" was conducted according to JIS K 7057 (Fiber-reinforced plastic composites - Determination of apparent interlaminar shear strength by short-beam method). As shown in FIG. 3(A), a sample was pressed at both ends and an indenter was pressed against the sample from the vicinity of the center at a speed of 1 mm/sec, then load-displacement was measured, and interlaminar shear state was observed by a cross-sectional photograph.

### <Interlaminar shear test result>

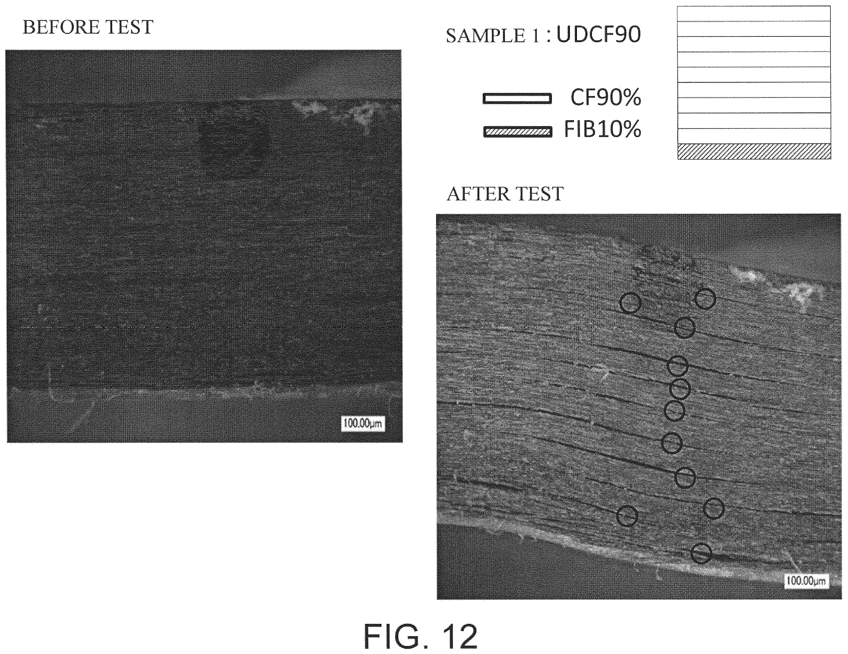

The cross-sectional photographs of each sample in the interlaminar shear test are shown in FIGS. 12 to 20.

In Sample 1 of FIG. 12, 11 delamination points were detected. All of the delamination points were between CFs.

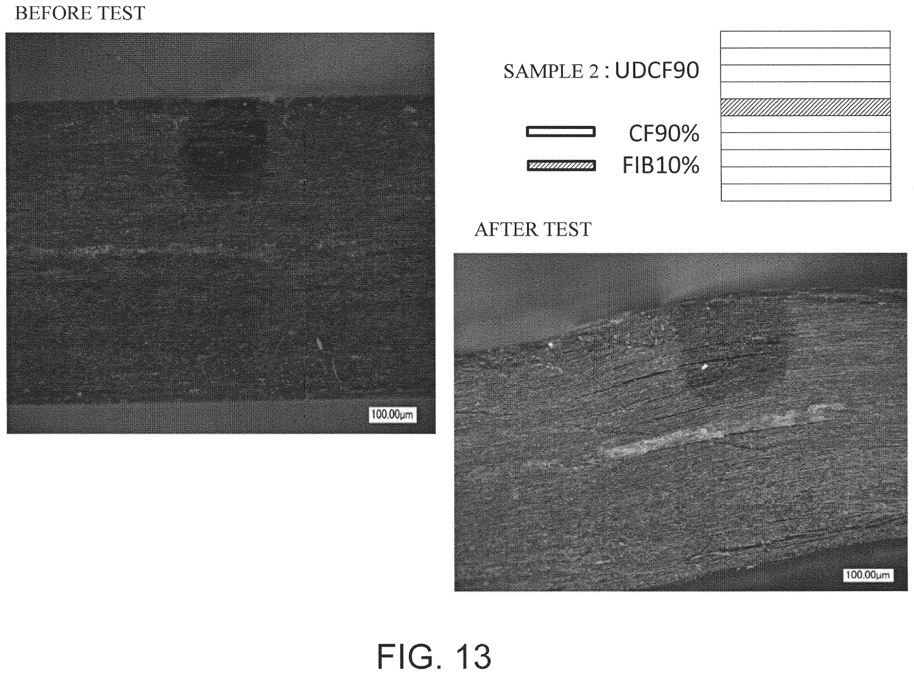

In Sample 2 of FIG. 13, 7 delamination points were detected. There were 6 delamination points between CFs and 1 delamination point between CF-FIB.

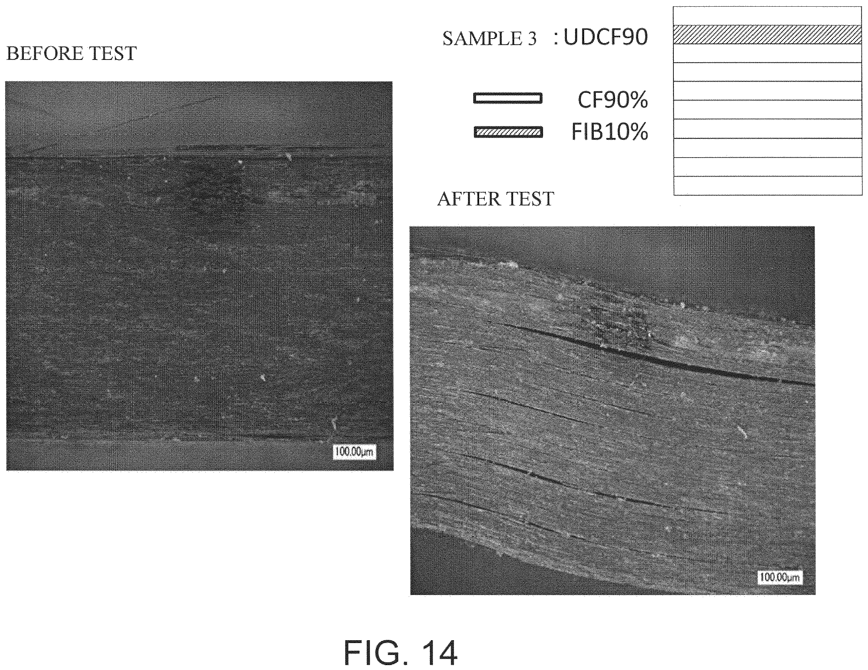

In Sample 3 of FIG. 14, 7 delamination points were detected. There were 6 delamination points between CFs and 1 delamination point between CF-FIB, which are the same results as in Sample 2.

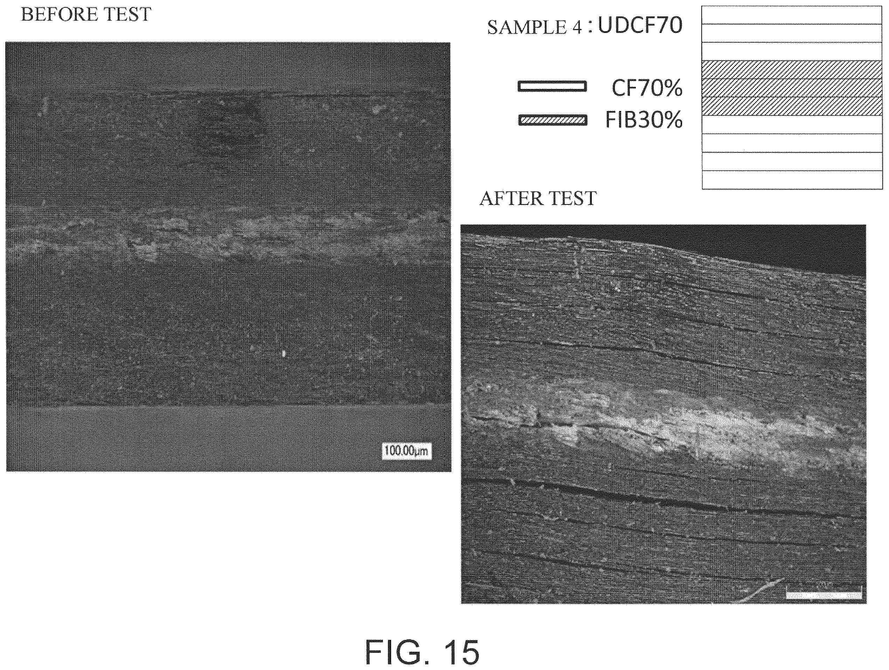

In Sample 4 of FIG. 15, 8 delamination points were detected. There were 7 delamination points between CFs and 1 delamination point between FIBs.

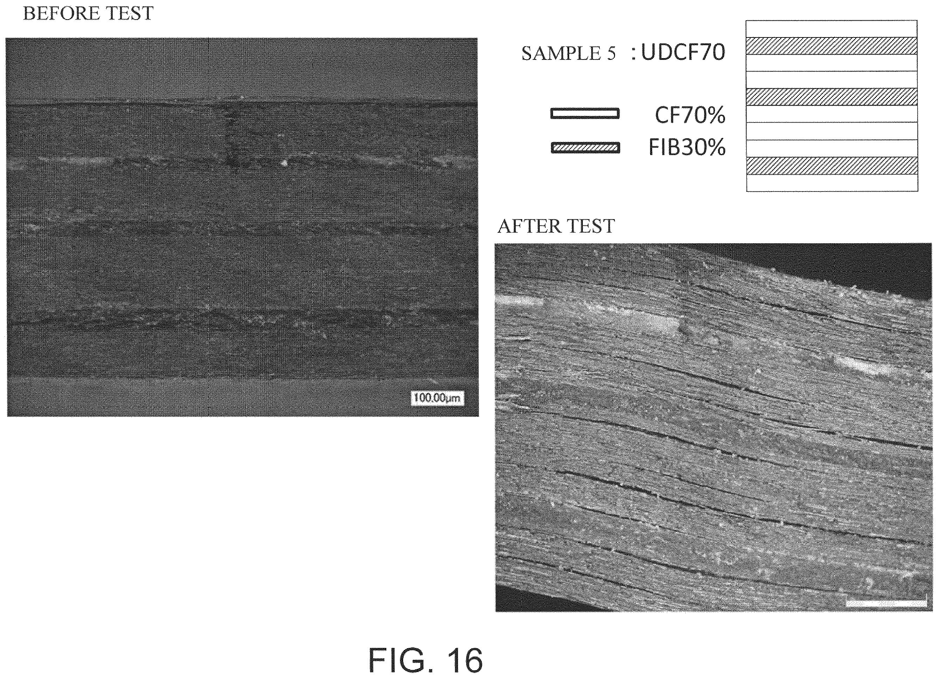

In Sample 5 of FIG. 16, 11 delamination points were detected. There were 8 delamination points between CFs and 3 delamination points between CF-FIB, which are the same results as in Sample 2.

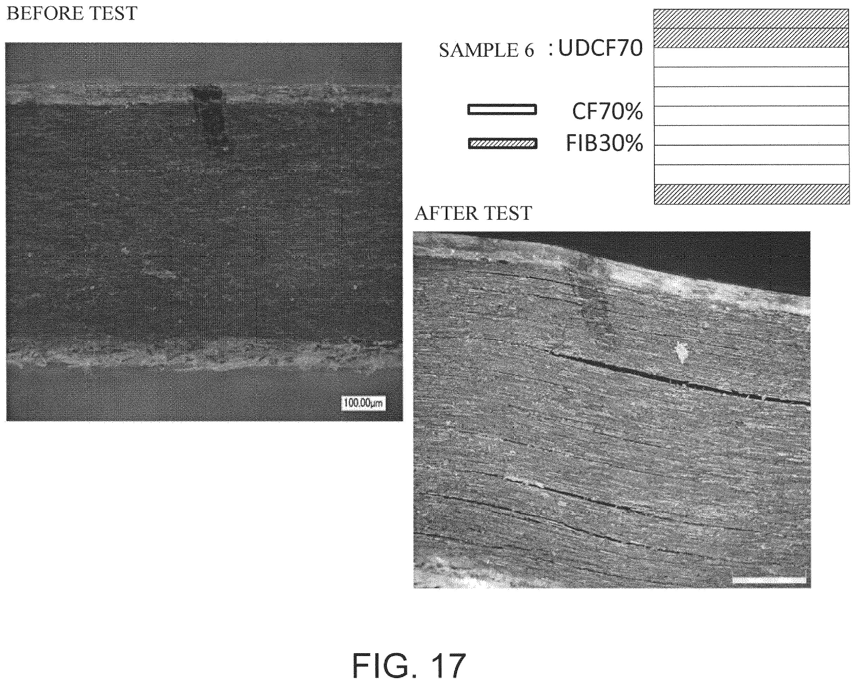

In Sample 6 of FIG. 17, 10 delamination points were detected. All of the delamination points were between CFs.

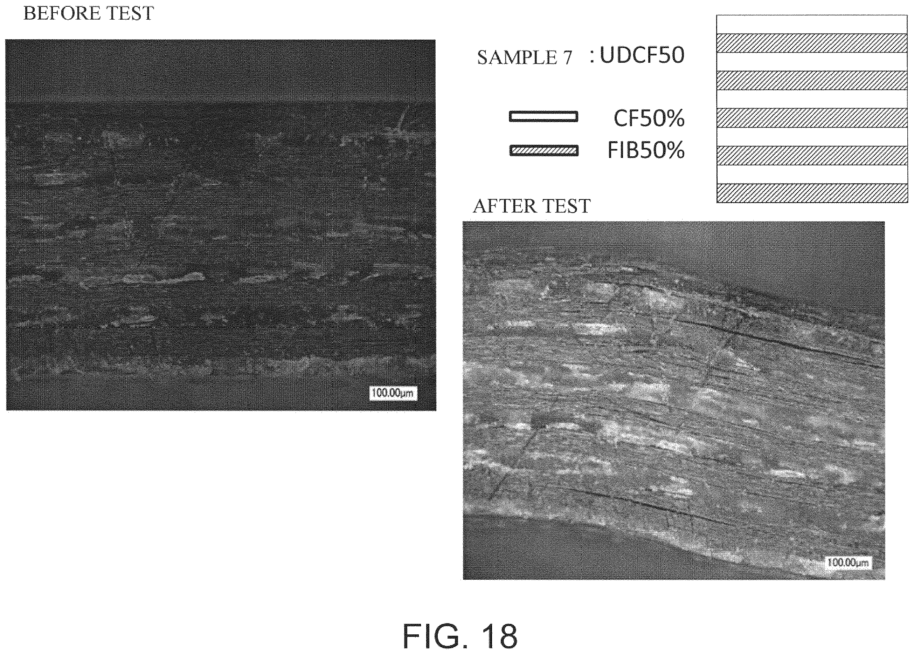

In Sample 7 of FIG. 18, 5 delamination points were detected. There were 3 delamination points between CFs and 2 delamination points between CF-FIB, which are the same results as in Sample 2.

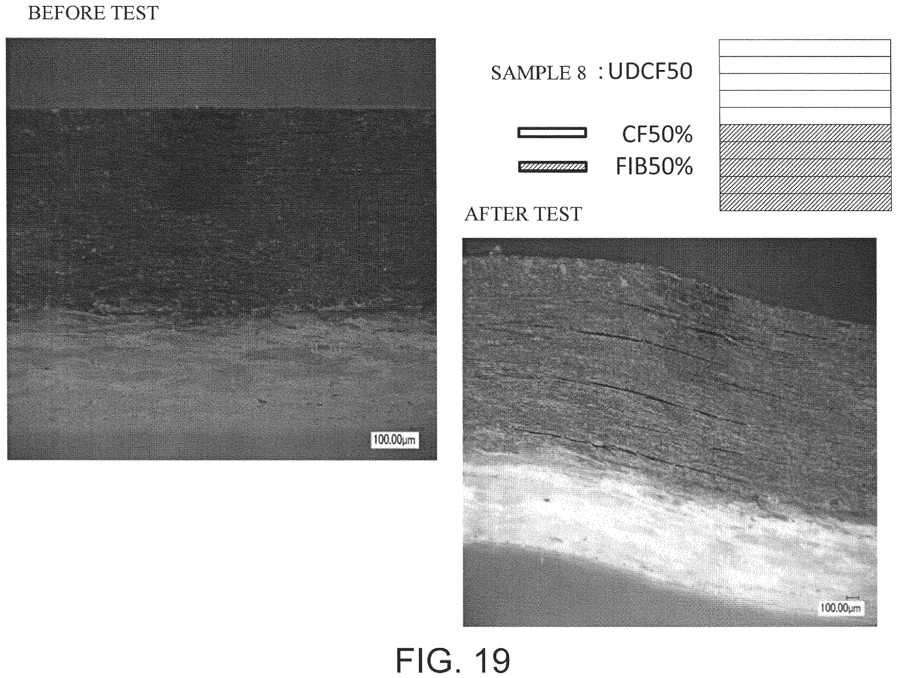

In Sample 8 of FIG. 19, 5 delamination points were detected. All of the delamination points were between CFs.

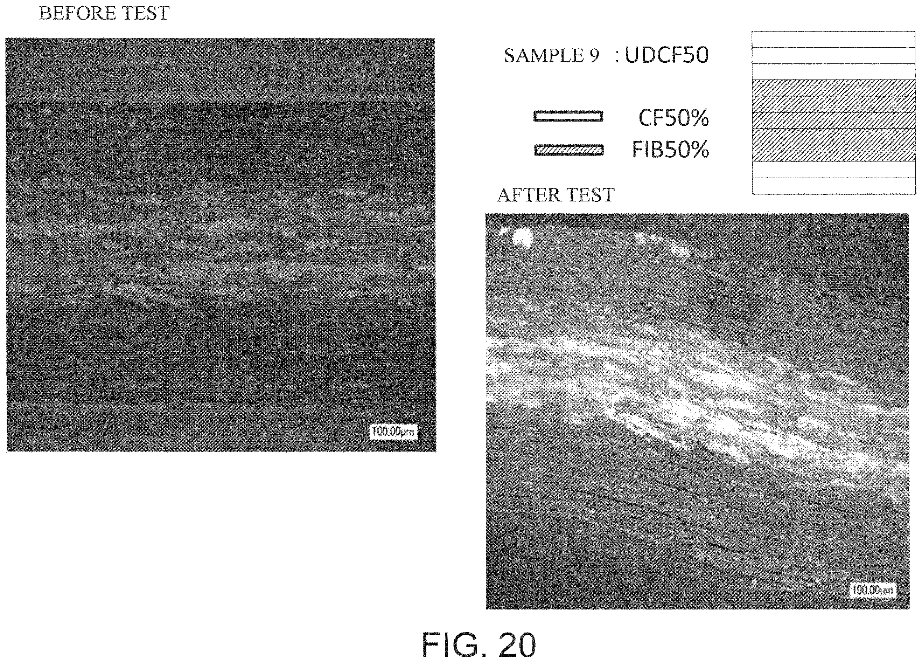

In Sample 9 of FIG. 20, 7 delamination points were detected. There were 5 delamination points between CFs and 2 delamination points between CF-FIB, which are the same results as in Sample 2.

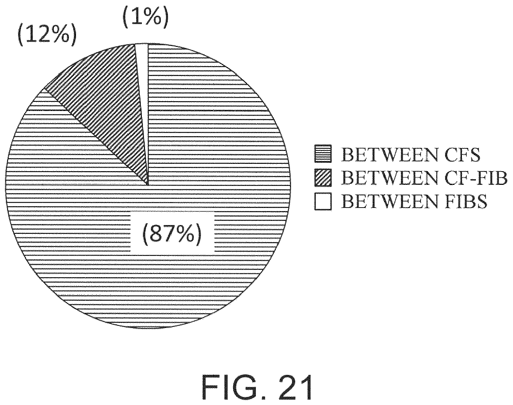

To summarize, as shown in FIG. 21, delamination was detected 61/70 (87%) between CFs, 8/70 (12%) between CF-FIB, and 1/70 (1%) between FIBs.

As described above, delamination can be reduced by adding the fibroin fiber-reinforced resin layer 32-2 (FIB). In particular, delamination occurs between layers (between CFs) of the carbon fiber-reinforced resin layers 32-1, and little delamination occurs between (CF-FIB) the fibroin fiber-reinforced resin layer 32-2 and the carbon fiber-reinforced resin layer 32-1, and between layers (between FIBs) of the fibroin fiber-reinforced resin layers 32-2. Therefore, it can be seen that the fibroin fiber-reinforced resin layer 32-2 is effective for preventing delamination.

Further, in Samples 7 and 8, delamination occurred at 5 points, which is less than in the others. Based on this, by adopting relatively more fibroin fiber-reinforced resin layers 32-2 (FIB) and arranging the fibroin fiber-reinforced resin layer 32-2 on the substrate 40 side, it was confirmed that the occurrence of delamination could be effectively prevented.

In particular, by arranging the fibroin fiber-reinforced resin layer 32-2 on the substrate side, it is possible to position the point where delamination occurs away from the substrate. Therefore, even when delamination occurs, strength as the fiber-reinforced resin coated body 50 can be maintained higher than in the case where delamination occurs at a position close to the substrate.

### REFERENCE SIGNS LIST

- 10: Carbon fiber-reinforced resin prepreg
- 12, 22: Resin
- 14: High-rigidity fiber
- 20: Fibroin fiber-reinforced resin prepreg
- 24: Fibroin fiber
- 30: Laminate
- 32: Fiber-reinforced resin layer
- 32-1: Carbon fiber-reinforced resin layer
- 32-2: Fibroin fiber-reinforced resin layer
- 40: Substrate
- 50: Fiber-reinforced resin coated body

## Claims

1. A fiber-reinforced resin material comprising a fiber material in a resin, wherein
the fiber material contains high-rigidity fibers and fibroin fibers.

2. The fiber-reinforced resin material according to claim 1, wherein
the high-rigidity fiber is a fiber with an initial elastic modulus of 30 GPa or more.

3. A laminate wherein fiber-reinforced resin layers comprising a fiber material in a resin is laminated and bonded, and
the fiber material contains high-rigidity fibers and fibroin fibers.

4. The laminate according to claim 3, wherein
the high-rigidity fiber contains at least one of an aramid fiber, a PBO fiber, a glass fiber, and a carbon fiber.

5. The laminate according to claim 3 or 4, wherein
the high-rigidity fiber is a carbon fiber.

6. The laminate according to any one of claims 3 to 5, wherein
the fiber-reinforced resin layers include
a carbon fiber-reinforced resin layer containing carbon fibers in a resin, and
a fibroin fiber-reinforced resin layer containing fibroin fibers in a resin.

7. The laminate according to any one of claims 3 to 6, wherein
the fiber-reinforced resin layers include
a fiber-reinforced resin layer in which carbon fibers and fibroin fibers are mixed in a resin.

8. A fiber-reinforced resin coated body comprising
a substrate that deforms by input of load, and
the laminate as defined in any one of claims 3 to 7,
wherein a fibroin fiber-reinforced resin layer mainly including fibroin fibers is laminated adjacent to the substrate.

9. The fiber-reinforced resin coated body according to claim 8, wherein
a ratio of the fibroin fiber-reinforced resin decreases with increasing distance from the substrate side.

10. The fiber-reinforced resin material according to claim 1 or 2, the laminate according to any one of claims 3 to 7, or the fiber-reinforced resin coated body according to claim 8 or 9, wherein
the fibroin fiber is a fiber composed of a protein derived from or similar to a natural spider silk protein.

11. The fiber-reinforced resin material according to claim 1 or 2, the laminate according to any one of claims 3 to 7, or the fiber-reinforced resin coated body according to claim 8 or 9, wherein
the fibroin fiber is silk.
